# EUROPEAN PATENT APPLICATION

(11) **EP 2 008 511 A2**
(43) Date of publication of application: **31.12.2008**
(21) Application number: 08011680.9
(22) Date of filing: 27.06.2008
(51) Int. Cl.: A01K 1/03, A01K 29/00

(54) **Device for inspecting animal cages**

(30) Priority: 28.06.2007 US 823742
(71) Applicant: Optilia Instruments AB, 192 51 Sollentuna (SE)
(72) Inventor: Esmaeili, Sasan, 169 74 Solna (SE)
(74) Representative: Strandin, Heléne

(57) **Abstract**

A device (1) for inspecting animal cages includes a frame (7) and a plurality of camera modules (15) mounted to the frame. The camera modules are for signal communication connected to a central unit (25) including a display (27). The camera modules are placed at the frame so that when the inspection device is placed in front of a row of animal cages a camera module is located in front of each cage in the row. The camera in the camera module is arranged to capture pictures and transfer the corresponding picture information to the central unit to show corresponding information on the display. A bar code scanner can be included in each camera module and is arranged to read identifying information placed at the animal cages and to also transfer this information to the central unit.

## Description

### BACKGROUND

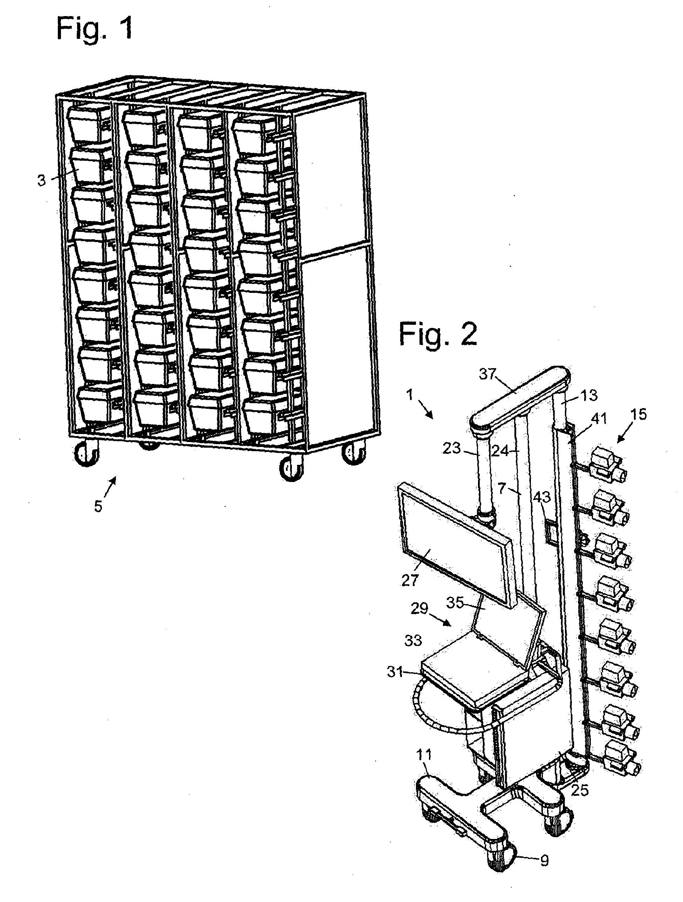

For test animals, in particular smaller animals such as mice and rats, racks are used having a multitude of cages placed in rows above one another. Such a rack can for example include 40 separate animal cages, see Fig. 1. All cages containing animals must be checked and inspected periodically, for example at least once a day. The time interval can be determined by special regulations issued by the authorities and can otherwise be set considering the physical condition of the animals and the test conditions. In the case where a large multitude of test animals are used this is of course a relatively slow and hard work, in particular if for instance several cages are placed at a low height over the floor or ground so that the inspecting person has to bend down in order to be able to make the inspection.

### SUMMARY

It is an object of the invention to provide a device that can assist in inspecting animal cages.

A device for inspecting animal cages includes a plurality of, i.e. at least two, modules that generally are placed at the sides of each other or for example above or on top of each other and each one of which includes a camera. A module can also include some means for reading identifying information such as a bar code scanner or an infrared or RF transceiver or receiver and/or one or more light sources, also called illumination sources, such as for emitting visible light and/or infrared light. Using the camera and possibly an illumination source pictures can be captured of a corresponding animal cage when the inspection device is placed in front of a set of animal cages. The device for reading identifying information in the module then reads identifying information. The components of the modules are connected to a central unit of some kind so that the information that is produced by the components can be shown as a graphical representation on a display or monitor. An operator can step through module after module and then obtains pictures of corresponding animal cages on the display. The operator can then feed suitable information to the central unit, for example for confirming that the corresponding animal cage has been inspected and/or information containing some judgment. All information fed into and received by the central unit can be stored for later checking and evaluation operations and/or be forwarded to other databases using a computer network.

### BRIEF DESCRIPTION OF THE DRAWINGS

The invention will now be described by way of non-limiting embodiments with reference to the accompanying drawings, in which:
- Fig. 1 is a perspective view of a rack and animal cages placed in the rack,
- Fig. 2 is a perspective view of a device for inspecting animal cages,
- Fig. 3 is a fragmentary view in a larger scale of a top portion of the device of Fig. 2,
- Fig. 4 is a fragmentary view in a larger scale of a bottom portion of the device of Fig. 2, and
- Fig. 5 is a fragmentary view in a larger scale of a camera module having an alternative design that can be included in the device of Fig. 2.

### DETAILED DESCRIPTION

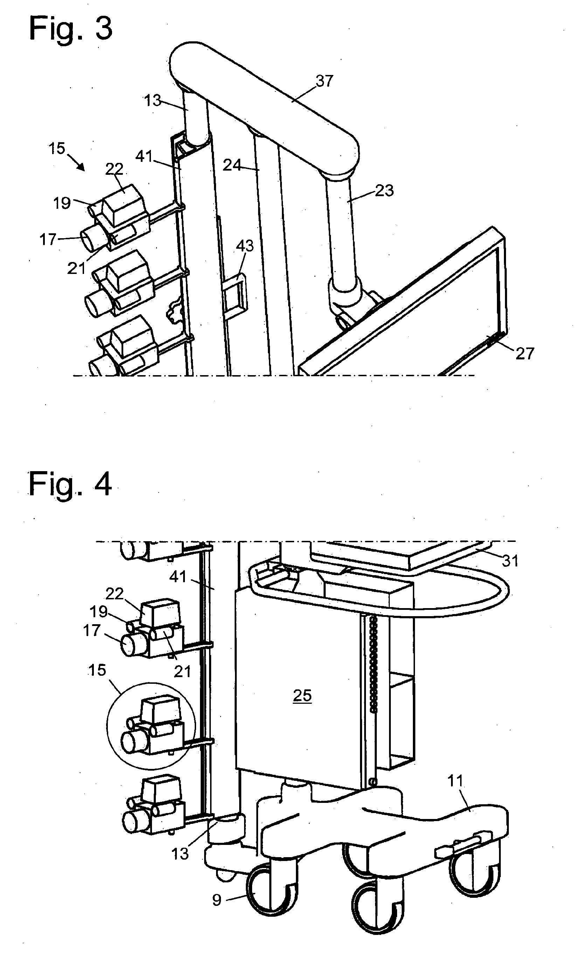

In Figs. 2, 3 and 4 a device 1 for inspecting animal cages 3 is shown, where it assumed that the cages are placed in horizontal rows above each other and in vertical rows beside each other. The cages can for example be arranged in a mobile rack 5 as illustrated in Fig. 1. The inspection device 1 includes a frame 7 which can be displaced e.g. along the floor or floors of experimental facilities to take a desired position. In the embodiment illustrated in the figures, the mobile inspection device has a foot part 11 provided with wheels 9 from which a pillar 13 extends upwards in a vertical direction. In another embodiment, not shown, the device is instead attached to the roof, e.g. suspended from a rail/rails or a groove along which it can be moved. A plurality of camera modules 15 are attached to the pillar. The number of such modules in this embodiment is advantageously equal to the number of horizontal rows of cages in the rack 5 and the camera modules are placed on the pillar with a pitch or at a distance from each other that corresponds to the pitch of the horizontal cage rows in the rack 5 so that when the inspection device 1 is placed in front of a vertical row of animal cages 3, a camera module 15 is located opposite or at least in front of each cage in the vertical row.

Each camera module 15 includes a camera 17 for the inspection operation. It can also include one or more light sources such as a light source 19 for visible light and/or a light source 21 for infrared light. The light source or sources are adapted and oriented to issue light into a cage 3 when the camera module in which they are included has been positioned in front of a cage. The camera module 15 can also include a device, such as a scanner 22, for reading identifying information on or associated with each animal or cage, e.g. a bar code, not shown, attached to the front of a cage. The function of the scanner can also, if desired or suitable, be performed by the camera 17 itself, this only requiring special recognition software for processing images captured by the camera. The device for reading the identifying information may generally comprise a wireless receiver of any suitable kind and it may additionally comprise an own source for issuing waves which after having been reflected are received and detected by the receiver. The components of the camera modules such as the cameras, light sources and devices for reading identifying information are coupled to communicate signals with a central unit, e.g. a personal computer 25 and a frame monitor 27. The personal computer can alternatively be or be supplemented with a laptop computer 29 resting on a shelf 31 arranged on the frame 7, as shown attached to one or more additional posts or pillars 23, 24 that extend vertically upwards from the center of the foot part 11. The laptop computer includes as conventional a keyboard 33 and an own display 35. The frame monitor 27 is also attached to the frame, such as to the rear pillar 23. A vertical top bar 37 can interconnect the vertical stand-posts 13, 23 and 24.

When the mobile inspection device 1 is to be used to inspect cages 3 in a rack 5 it is moved so that the camera modules 15 are located in front of the cages in a selected one of the vertical rows in the rack. In the case where the device has wheels 9 as illustrated they can suitably be lockable and in that case they are locked after the inspection device has been brought to the intended position. Each of the camera modules 15 is then positioned in front of an individual one of the cage in the selected row. If the vertical positions of the camera modules have to be adjusted, all the camera modules can be attached to a bar or sleeve 41 that can move or slide vertically along the vertical post 13 and be locked in a selected position by operating a locking device 43. Then, the bar or sleeve can in an adjusting movement be vertically displaced, simultaneously displacing all the camera modules 15.

An operator activates, using suitable input means such as the keyboard 33 of the computer 29 a first one of the camera modules 15, for example the top camera module in the vertical row. The device 22 for reading identifying information in the activated camera module reads the identifying information of the cage 3 and the camera 17 captures one or more pictures or digital video films, possibly continuously, of the interior of the cage, using if necessary or desired a suitable illumination by activating one of the light sources 19, 21. The information from the device for reading identifying information and the camera is shown in some suitable way on the monitor display 27, for example so that the camera picture takes most of the display area and the number of the cage in the vertical row and the identifying information of the cage are shown at the border of the camera picture. The operator performs a visual inspection of the camera picture and then or thereafter enters the result of the inspection using the input means 33. If required the operator can by a special input command e.g. switch to the other one of the light sources 19, 21 or activate any thereof in the active module 15 if the taken picture is not satisfactory. Thereupon the operator sends a command that the next cage 3 in the same row is to be inspected, and then the first camera module 15 is switched off and the next camera module located directly below the first module is activated. Thereafter the inspection procedure is repeated for this camera module, etc. After all cages in a vertical row have been inspected, the inspection device 1 is moved to the next vertical row of cages 3, etc.

By a special command, all the camera modules 15 can be simultaneously activated. For this command, the monitor 27 can show a composite picture containing simultaneously the pictures currently taken or being taken by the cameras 17. The composite picture contains fields arranged at the sides of each other, each one of fields showing the picture or pictures from an individual one of the cameras. The number of fields corresponds to the number of camera modules 15.

When reading the information and when a camera 17 captures pictures the corresponding information can be stored for future use in the central unit 25. Also the information input by the operator is suitably stored.

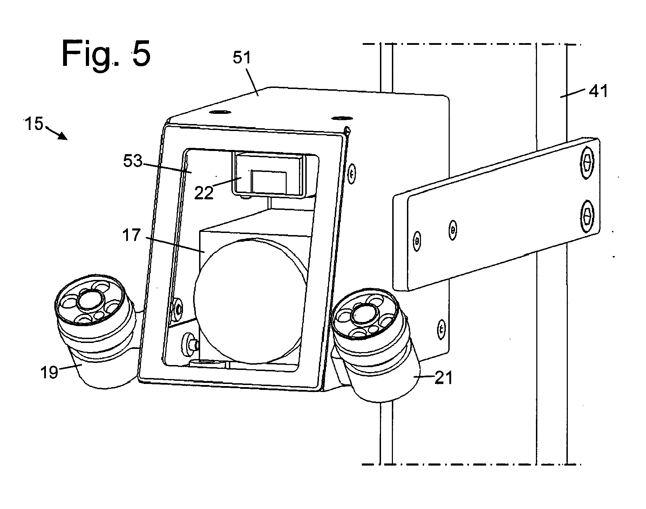

A slightly different embodiment of a camera module 15 is illustrated in Fig. 5. The camera 17 and the device 22 for reading identifying information are here placed inside a housing 51 that has a transparent front wall, e.g. a glass plate 53. The light sources 19, 21 are placed on opposite sides of the housing. As illustrated, the transparent front wall can be somewhat tilted, e.g. in an angle in the range of 2 - 10°, from a vertical position. Such a tilted arrangement can prevent or at least significantly reduce reflected laser light issued by the device 22 for reading identifying information, in the case where it is configured as a conventional bar code scanner, from reaching the lens of the camera 17. It can also help preventing that light emitted by the light sources 19, 21 and reflected by some detail of a cage currently being inspected from reaching the camera. This may also be achieved by mounting the light sources so that they do no emit light in forward direction, i.e. basically in a horizontal direction parallel to the optical axis of the camera 17. Instead they may, as illustrated in the drawing, emit light in a direction tilted upwards, e.g. in an angle in the range of 5 - 30° to a horizontal plane.

Each camera module 15 can be arranged so that it in a preparatory setting procedure has been individually positioned in relation to a cage 3. Furthermore, all the camera modules can be mechanically interconnected by a mechanism, not shown, for example including a movable vertical bar, not shown, so that they all together, by a suitable manual operation using a handle or similar device, can be tilted around horizontal axes and rotated about vertical axes to have their optical axis be directed more or less upwards or downwards or sideways from a normal position in which the camera 17 and the scanner 19 of the considered camera module both read the cage in a horizontal direction.

The camera 17 included in the camera modules 15 can be arranged to take pictures in normal light and/or to take pictures using light in the IR range. The light sources 19, 21 are then, as described above, suitably arranged in the corresponding way. Furthermore, the camera 17 can either be a simple type camera having a single magnifying lens or be provided with a zoom function.

As mentioned above, the inspection device 1 can be suspended from a rail or a groove along which it can be moved. Generally, the inspection device can be movable along some suitable elongated guide device, e.g. a rail, a groove or an electronic guide, not shown. The guide device can be placed where suitable such as in the floor or in the roof of the room or rooms where animal cages are placed. The inspection device 1 may then, if desired, be provided with a motor, not shown, for propagating it and then some control circuit can command the motor to displace the inspection device to place it in front of a selected vertical row of cages in order to perform an inspecting operation.

## Claims

1. A device (1) for inspecting animal cages comprising
- a frame (7) ,
- a central unit (25) including a display (27),
- a plurality of camera modules (15) mounted to the frame and connected to the central unit,
**characterized in that** the camera modules (15) are placed at or mounted to the frame (7) so that when the inspection device is placed in front of a row of animal cages an individual one of the camera modules is located in front of each animal cage in the row, and so that the camera (17) included in each of the camera modules is arranged to capture at least one picture of the animal cage and to transfer signals carrying corresponding picture information to the central unit (25).

2. A device according to claim 1, **characterized in that** each of the camera modules (15) includes a device (22) for reading identifying information that is arranged to read identifying information placed at an animal cage and to transfer signals carrying this information to the central unit (25).

3. A device according to any of claims 1 - 2, **characterized in that** the connection to the central unit (25) is made so that one at a time of the camera modules (15) is activated for delivering signals to the central unit.

4. A device according to any of claims 1 - 3, **characterized in that** the connection of each of the camera modules (15) to the central unit is made so that for feeding a suitable command to the central unit the cameras (17) of all the camera modules are simultaneously activated and the signals delivered from of the camera modules are multiplexed in such a way that pictures corresponding to picture information received from the cameras (17) of all of the camera modules are shown simultaneously in individual fields on the display (27).

5. A device according to any of claims 1 - 4, **characterized in that** the frame (7) includes a vertical pillar (13) at which the camera modules (15) are mounted.

6. A device according to any of claims 1 - 5, **characterized in that** each of the camera modules (15) includes a light source (19, 21).

7. A device according to any of claims 1 - 6, **characterized in that** all of the camera modules (15) are mechanically interconnected (41) so that they can commonly or jointly be displaced along a vertical axis.

8. A device according to any of claims 1 - 7, **characterized in that** all of the camera modules (15) are mechanically interconnected so that they can commonly or jointly be tilted about horizontal and/or vertical axes.
